# EUROPEAN PATENT APPLICATION

(11) **EP 4 734 227 A1**
(43) Date of publication of application: **29.04.2026**
(21) Application number: 25205171.9
(22) Date of filing: 29.09.2025
(51) Int. Cl.: H01M 10/613, H01M 10/6556, H01M 10/6568, H01M 10/651

(54) **BATTERY PACKS AND BATTERY SYSTEMS**

(30) Priority: 27.09.2024 CN 202411371823; 27.09.2024 CN 202422386786 U; 03.12.2024 WO PCT/CN2024/136333
(71) Applicant: Eve Energy Storage Co., Ltd, Wuhan, Hubei 430000 (CN)
(72) Inventor: YU, Zhonghui, Wuhan, Hubei, 430000 (CN); JIANG, Donglei, Wuhan, Hubei, 430000 (CN); FAN, Shilin, Wuhan, Hubei, 430000 (CN); FENG, Chaojun, Wuhan, Hubei, 430000 (CN); GONG, Muhong, Wuhan, Hubei, 430000 (CN); ZHU, Yuan, Wuhan, Hubei, 430000 (CN)
(74) Representative: Berggren Oy

(57) **Abstract**

A battery pack includes at least one housing, at least one battery and at least one liquid cooling plate. The housing has an accommodation space and comprises a first end portion and a second end portion arranged opposite to each other. The first and the second end portions are respectively provided with a first liquid inlet and a first liquid outlet. The battery is arranged within the accommodation space. The liquid cooling plate abuts on the housing and configured to accommodate a cooling liquid, and comprises a third end portion and a fourth end portion arranged opposite to each other. The third and the fourth end portions are respectively provided with a second liquid outlet and a second liquid inlet. The first end portion abuts on the third end portion, and the second end portion abuts on the fourth end portion.

## Description

### TECHNICAL FIELD

The present application relates to battery technologies, and in particular to battery packs and battery systems.

### BACKGROUND

Thermal management is a critical factor for ensuring battery performance and safety in a lithium battery system. In general, battery packs may employ two optional thermal management solutions: indirect liquid cooling and immersion cooling. The indirect liquid cooling suffers from limited heat dissipation effect due to a limited contact area between a cooling medium and a battery cell, making it difficult to meet the requirements of high-power charging and discharging. In contrast, with the immersion cooling, while the contact area between the battery cell and the cooling medium may be increased and thus temperature uniformity may be improved, the heat cannot be effectively taken away due to lack of liquid flow and thus the heat dissipation effect will be adversely affected.

### SUMMARY

According to some embodiments, a battery pack includes at least one housing, at least one battery and at least on liquid cooling plate. The housing has an accommodation space configured to accommodate an immersion liquid and comprises a first end portion and a second end portion arranged opposite to each other. The first end portion is provided with a first liquid inlet, and the second end portion is provided with a first liquid outlet. The battery is arranged within the accommodation space. The liquid cooling plate abuts on the housing and configured to accommodate a cooling liquid, and comprises a third end portion and a fourth end portion arranged opposite to each other. The third end portion is provided with a second liquid outlet, and the fourth end portion is provided with a second liquid inlet. The first end portion abuts on the third end portion, and the second end portion abuts on the fourth end portion.

According to some embodiments, a battery system includes the above battery pack and a control component for controlling the above battery pack.

### BRIEF DESCRIPTION OF THE DRAWINGS

FIG. 1 is a schematic diagram of a first structure of a battery pack according to some embodiments of the present application.
FIG. 2 schematically shows a cross-section of a battery pack according to some embodiments of the present application.
FIG. 3 is a schematic diagram of a second structure of a battery pack according to some embodiments of the present application.
FIG. 4 is a schematic diagram of the battery pack, as shown in FIG. 1, when viewed from another angle.
FIG. 5 is a schematic diagram of a third structure of a battery pack according to some embodiments of the present application.
FIG. 6 is a schematic diagram of the battery pack, as shown in FIG. 5, when viewed from another angle.
FIG. 7 is a cross-sectional view of the battery pack along line A-A in FIG. 6.
FIG. 8 is a schematic diagram of a fourth structure of a battery pack according to some embodiments of the present application.
FIG. 9 is a schematic diagram of the battery pack, as shown in FIG. 8, when viewed from another angle.
FIG. 10 is a schematic diagram of the battery pack, as shown in FIG. 8, when viewed from still another angle.
FIG. 11 is a cross-sectional view of the battery pack along line B-B in FIG. 10.

### DETAILED DESCRIPTION

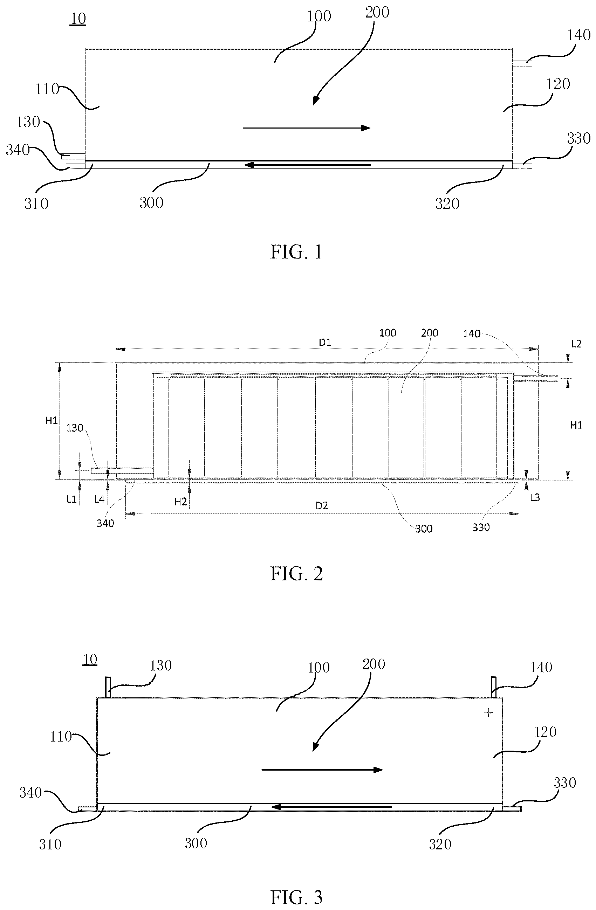

FIG. 1 is a schematic diagram of a first structure of a battery pack according to some embodiments of the present application. The battery pack 10 combines indirect liquid cooling and immersion cooling to provide a more effective thermal management solution. The battery pack 10 includes a housing 100, a battery 200, and a liquid cooling plate 300.

The housing 100 is an external structure of the battery pack 10 and is configured to protect the battery 200 and an immersion cooling system in the housing 100. The housing 100 has an accommodation space inside for accommodating an immersion liquid, which can directly contact the battery 200 in the accommodation space. The housing 100 has a first end portion 110 and a second end portion 120 arranged opposite to each other. The first end portion 110 is provided with a first liquid inlet 130, and the second end portion 120 is provided with a first liquid outlet 140. When the immersion liquid is injected into the accommodation space of the housing 100 through the first liquid inlet 130, the immersion liquid is in a relatively low-temperature state. As the immersion liquid flows within the accommodation space, a temperature of the immersion liquid gradually rises due to directly contact with the battery 200, and the immersion liquid is then discharged through the first liquid outlet 140. In the embodiments, the immersion liquid within the housing 100 is flowing, enabling more effectively heat removal and improving heat dissipation effect.

The battery 200 is a core component of the battery pack 10, arranged within the accommodation space and surrounded by the immersion liquid. Heat generated by the battery 200 during charging and discharging is effectively dissipated through the immersion liquid. A material system of the battery 200 is not limited. The battery 200 may be a ternary lithium battery, lithium iron phosphate battery, or lithium manganese iron phosphate battery. The battery 200 may be configured as a prismatic cell, a cylindrical cell, a pouch-type cell, or other forms.

The liquid cooling plate 300 abuts on the housing 100 and indirectly contacts the battery 200. The liquid cooling plate 300 may be arranged on any of the sides, top, or bottom of the housing 100. As shown in the figure, the liquid cooling plate 300 is located on the bottom of the housing 100. The liquid cooling plate 300 accommodates cooling liquid that flows internally, absorbing and dissipating the heat transferred from the battery 200 to the liquid cooling plate 300. The liquid cooling plate 300 also has a third end portion 310 and a fourth end portion 320 arranged opposite to each other. The third end portion 310 is provided with a second liquid outlet 340, while the fourth end portion 320 is provided with a second liquid inlet 330. The cooling liquid enters the liquid cooling plate 300 through the second liquid inlet 330. Upon entering the liquid cooling plate 300, the cooling liquid is at a relatively low-temperature state. As the cooling liquid flows within the liquid cooling plate 300, it absorbs the heat transferred from the battery 200 to the liquid cooling plate 300, causing a temperature of the cooling liquid to gradually rise. The cooling liquid is then discharged through the second liquid outlet 340.

**The** first end portion 110 and the third end portion 310 are abutting on each other, while the second end portion 120 and the fourth end portion 320 are abutting on each other. Consequently, the first liquid inlet 130 for the immersion liquid and the second liquid outlet 340 for the cooling liquid are relatively close to each other, while the first liquid outlet 140 for the immersion liquid and the second liquid inlet 330 for the cooling liquid are relatively close to each other. It should be understand that although the immersion liquid at the first liquid outlet 140 of the second end portion 120 is at a relatively high temperature, which is unfavorable for the heat dissipation in an area adjacent to the second end portion 120 of the housing 100, the second liquid inlet 330 close to the first liquid outlet 140 injects lower-temperature cooling liquid, which can effectively assist in the heat dissipation and cooling in the area adjacent to the second end portion 120.

Similarly, although the cooling liquid at the second liquid outlet 340 of the third end portion 310 is at a relatively high temperature, which is unfavorable for the third end portion 310 of the liquid cooling plate 300 to absorb heat from the first end portion 110 of the housing 100 abutting on it, the first liquid inlet 130 close to the second liquid outlet 340 injects lower-temperature immersion liquid, which can effectively assist in the heat dissipation and cooling in an area adjacent to the first end portion 110. Therefore, for the battery 200 within the housing 100, a lower-temperature cooling medium is always available to effectively assist in cooling the battery 200, whether at the first end portion 110 or the second end portion 120.

This embodiment achieves synergistic interaction between the immersion liquid and the cooling liquid within battery pack 10 through precise arranging relative positions of the first liquid inlet 130, the first liquid outlet 140, the second liquid inlet 330, and the second liquid outlet 340, ensuring thorough cooling of the battery 200 across all regions. This guarantees more uniform and effective dispersion of heat generated by the battery 200, minimizes temperature variations across its surface, prevents localized heat accumulation and achieves a more consistent temperature distribution throughout the entire battery 200. Consequently, a risk of performance degradation and shortened lifespan of the battery 100 caused by temperature differences is reduced.

**It** should be noted that, in the embodiment, the liquid cooling plate 300 abuts on the housing 100. This can be understood to mean that the liquid cooling plate 300 may be abutting on any side of the housing 100.For example, the liquid cooling plate 300 may be abutting on the top plate, the bottom plate, or any other side of the housing 100. Furthermore, the housing 100 can be considered to have two ends: the first end portion 110 and the second end portion 120, regardless of whether viewed in its length, width, or height direction. Similarly, the liquid cooling plate 300 can also be considered to have two ends: the third end portion 310 and the fourth end portion 320, regardless of whether viewed in its length, width, or height direction.

FIG. 2 is a cross-sectional view of the battery pack 10 according to some embodiments of the present application.

**In** some embodiments, a distance between the first liquid inlet 130 and the second liquid outlet 340 is L1, which can be measured by inserting a vernier caliper into the first liquid inlet 130 and the second liquid outlet 340, respectively. Alternatively, the distance between the first liquid inlet 130 and the second liquid outlet 340 can be measured using a ruler or other measuring tools. Where 1 cm≤L1≤10 cm, and particularly, L1 may be 1 cm, 2 cm, 3 cm, 4 cm, 5 cm, 6 cm, 7 cm, 8 cm, 9 cm, 10 cm, etc. Within this range, L1 ensures sufficient heat exchange between the cooling liquid in the liquid cooling plate 300 and the immersion liquid in the housing 100, thereby achieving an uniform heat distribution.

**In** some embodiments, a distance between the first liquid outlet 140 and a side of the housing 100 away from the liquid cooling plate 300 is L2, which can represent a distance from the first liquid outlet 140 to a top surface of the housing 100.L2 can be measured by inserting a vernier caliper into the first liquid outlet 140 and resting it against the top surface of the housing 100. Alternatively, the distance between the first liquid outlet 140 and the top surface of the housing 100 can be measured using a ruler or other measuring tools. Where 15 cm≤L2≤22 cm, and L2 may be 15 cm, 16 cm, 17 cm, 18 cm, 19 cm, 20 cm, 21 cm, 22 cm, etc. Within this range, L2 ensures that the first liquid outlet 140 is positioned higher than or equal to a height of components such as an aluminum busbar above the battery 200, This guarantees complete immersion of the battery 200 in the immersion liquid. Exceeding this range may cause the heat-absorbed immersion liquid, being of a lower density, to naturally rise within the accommodation space and become difficult to discharge.

**In** some embodiments, a distance between the second liquid inlet 330 and a side of the liquid cooling plate 300 close to the housing 100 is L3, which can represent a distance between the second liquid inlet 330 and the housing 100. A distance between the second liquid outlet 340 and a side of the liquid cooling plate 300 close to the housing 100 is L4, which can represent a distance between the second liquid outlet 340 and the housing 100. Here, L4≤L3, meaning the second liquid inlet 330 is farther from the housing 100 than the second liquid outlet 340.The second liquid inlet 330 is positioned lower than the second liquid outlet 340, ensuring maximum immersion of the cooling liquid within the liquid cooling plate 300. Additionally, 2 cm≤L4≤6 cm, where L4 may be 2 cm, 3 cm, 4 cm, 5 cm, 6 cm, etc.

**In** some embodiments, a height of the housing 100 is H1, which represents a distance between an upper surface and a lower surface of the housing 100. A height of the liquid cooling plate 300 is H2, which represents a distance between an upper face and a lower face of the liquid cooling plate 300. A ratio H1/H2 satisfies 2≤H1/H2≤5, and H1/H2 may be 2, 3, 4, 5, etc. The height of the housing 100 is 2 to 5 times the height of the liquid cooling plate 300. Consequently, a volume of the immersion liquid inside the housing 100 is 2 to 5 times a volume of the cooling liquid inside the liquid cooling plate 300. This ensures sufficient heat exchange between the cooling liquid within the liquid cooling plate 300 and the immersion liquid within the housing 100, thereby achieving a uniform heat distribution.

**In** some embodiments, a length of the housing 100 is D1, which represents a distance between a left surface and a right surface of the housing 100. A length of the liquid cooling plate 300 is D2, which represents a distance between a left surface and a right surface of the liquid cooling plate 300. Here, D1-D2 satisfies 15 cm≤D1-D2≤22 cm, representing an distance by which the liquid cooling plate 300 is shorter than the housing 100, and may be 15 cm, 16 cm, 17 cm, 18 cm, 19 cm, 20 cm, 21 cm, 22 cm, etc. The liquid cooling plate 300 is shorter than the housing 100, creating an empty space beside the housing 100. Within the above range, on one hand, a connection space for pipes of the first liquid inlet 130 and first liquid outlet 140 on adjacent housings 100 can be provided, on the other hand, a spatial utilization rate of a battery system can be ensured.

**FIG.** 3 is a schematic diagram of a second structure of a battery pack according to some embodiments of the present application. The embodiments allow for adjusting positions of the first liquid inlet 130 at the first end portion 110, the first liquid outlet 140 at the second end portion 120, the second liquid inlet 330 at the fourth end portion 320, and the second liquid outlet 340 at the third end portion 310 according to layout requirements. The position of the first liquid inlet 130 at the first end portion 110 shown in FIG. 1 differs from that shown in FIG. 3, but both are located at the first end portion 110. Similarly, the position of the first liquid outlet 140 at the second end portion 120 also differs in FIG. 1 and FIG. 3, but both are located at the second end portion 120. The embodiments impose no limitations on these positions, provided that the first end portion 110 of the first liquid inlet 130 abuts on the third end portion 310 of the second liquid outlet 340, and the second end portion 120 of the first liquid outlet 140 abuts on the fourth end portion 320 of the second liquid inlet 330. This arrangement enables more uniform and effective heat dissipation for the battery 200 through the synergistic interaction between the immersion liquid and the cooling liquid.

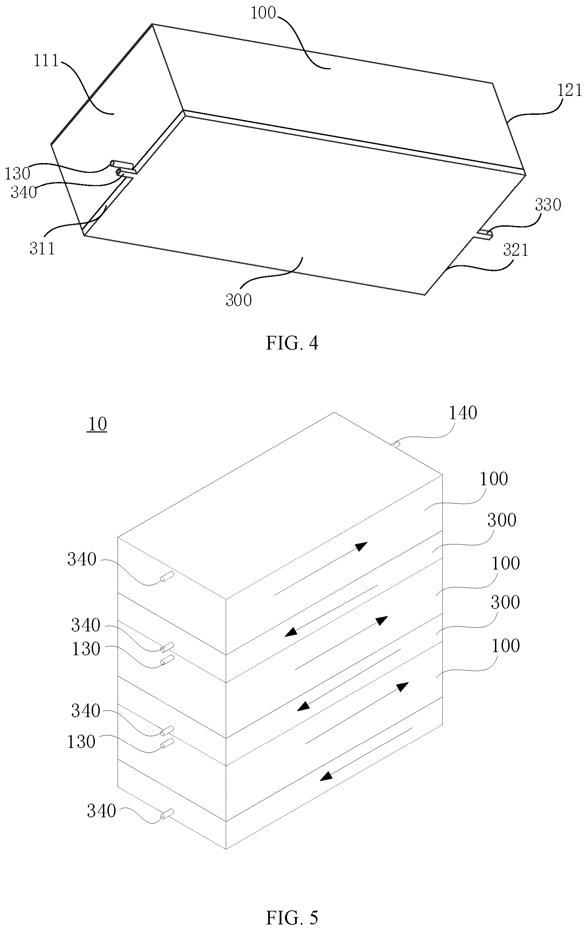

**FIG.** 4 is a schematic diagram of the structure of the battery pack in FIG. 1 when viewed from another angle. In a length direction of the housing 100, the first end portion 110 includes a first end plate 111, and the second end portion 120 includes a second end plate 121. The first end plate 111 and second end plate 121 are arranged opposite to each other. The first liquid inlet 130 is provided on the first end plate 111, and the first liquid outlet 140 is provided on the second end plate 121. In a length direction of the liquid cooling plate 300, the third end portion 310 includes a third end plate 311, and the fourth end portion 320 includes a fourth end plate 321. The third end plate 311 and fourth end plate 321 are arranged opposite to each other. The second liquid outlet 340 is provided on the third end plate 311, and the second liquid inlet 330 is provided on the fourth end plate 321. The third end plate 311 and first end plate 111 are arranged on a same side of the housing 100, and the second end plate 121 and fourth end plate 321 are arranged on a same side of the housing 100.

**In** the embodiments, the housing 100 has two ends arranged opposite to each other in a length direction of the housing 100. The first end portion 110 is located at one of the two ends of the housing 100 and includes the first end plate 111. The first end plate 111 is provided with the first liquid inlet 130 for the immersion liquid, configured to inject low-temperature immersion liquid. The second end portion 120 is located at the other one of the two ends of the housing 100 and includes a second end plate 121. The second end plate 121 is provided with the first liquid outlet 140 for the immersion liquid, configured to discharge the immersion liquid whose temperature has risen after absorbing heat. Similarly, the liquid cooling plate 300 also has two ends arranged opposite to each other in a length direction of the liquid cooling plate 300. The third end portion 310 is located at one of the two ends of the liquid cooling plate 300 and includes a third end plate 311. The third end plate 311 is provided with the second liquid outlet 340 for the cooling liquid, configured to discharge the cooling liquid whose temperature has risen after absorbing heat. The fourth end portion 320 is located at the other one of the two ends of the liquid cooling plate 300 and includes a fourth end plate 321. The first end plate 321 is provided with the second liquid inlet 330 for the cooling liquid, configured to inject low-temperature cooling liquid. That is, in the embodiments, the first liquid inlet 130 and first liquid outlet 140 are arranged in the length direction of the housing 100, and the second liquid inlet 330 and second liquid outlet 340 are arranged in the length direction of the liquid cooling plate 300. This arrangement allows for a longer flow path for the immersion liquid and the cooling liquid, providing more time to absorb and dissipate heat during flow, thereby achieving more effective heat dissipation.

The third end plate 311 and first end plate 111 are located on the same side of the housing 100, while the second end plate 121 and fourth end plate 321 are located on the same side of the housing 100. Therefore, the second liquid outlet 340 for the cooling liquid and the first liquid inlet 130 for the immersion liquid are located on the same side of the housing 100 and are relatively close to each other in spatial layout. Similarly, the second liquid inlet 330 for the cooling liquid and the first liquid outlet 140 for the immersion liquid are also located on the same side of the housing 100 and are relatively close to each other in spatial layout. It can be understood that although the temperature of the immersion liquid adjacent to the first liquid outlet 140 is relatively high, the temperature of the cooling liquid adjacent to the second liquid inlet 330, which is located on the same side with and relatively close to the first liquid outlet 140, is lower. Similarly, although the temperature of the cooling liquid adjacent to the second liquid outlet 340 is relatively high, the temperature of the immersion liquid adjacent to the first liquid inlet 130, which is located on the same side with and relatively close to the second liquid outlet 340, is lower. This ensures that in different regions of the battery 200, there is always a lower-temperature cooling medium absorbing heat. This facilitates more uniform and effective dispersion of heat generated by the battery 200, avoiding localized heat accumulation within the battery 200.

**In** some embodiments, with continued reference to FIG. 1 and FIG. 3, a flow direction of the cooling liquid within the liquid cooling plate 300 is opposite to a flow direction of the immersion liquid within the housing 100. It can be understood that in the embodiments, when the immersion liquid is injected into the housing 100 through the first liquid inlet 130 at the first end portion 110 and discharged from the first liquid outlet 140 at the second end portion 120, the cooling liquid is simultaneously injected into the liquid cooling plate 300 through the second liquid inlet 330 at the fourth end portion 320 and discharged from the second liquid outlet 340 at the third end portion 310. Since the first end portion 110 and the third end portion 310 are abutting on each other, and the second end portion 120 and the fourth end portion 320 are abutting on each other, the flow direction of the cooling liquid within the liquid cooling plate 300 can be opposite to the flow direction of the immersion liquid within the housing 100.

**It** can be understood that along the flow direction of the immersion liquid within the housing 100, the temperature of the immersion liquid gradually increases as the immersion liquid absorbs the heat within the battery 200 during flow. Similarly, along the flow direction of the cooling liquid within the liquid cooling plate 300, the temperature of the cooling liquid also rises after absorbing the heat within the liquid cooling plate 300. Since the flow direction of the cooling liquid within the liquid cooling plate 300 and the flow direction of the immersion liquid within the housing 100 are opposite to each other, a temperature change trend of the immersion liquid within the housing 100 and a temperature change trend of the cooling liquid within the liquid cooling plate 300 are inverse relative to the battery 200. This ensures that in different regions on either side of the battery 200, there is always a lower-temperature cooling medium absorbing the heat. For example, on one side of the battery 200, the immersion liquid is at a higher temperature and the cooling liquid is at a lower temperature, while on the other side of the battery 200, the cooling liquid is at a higher temperature and the immersion liquid is at a lower temperature. This facilitates a more uniform and effective dispersion the heat generated by the battery 200, reduce temperature variations across the surface of the battery 200, and avoid the localized heat accumulation within the battery 200.

For example, the liquid cooling plate 300 abuts on a bottom plate of the housing 100. The immersion liquid enters from the first end plate 111 on a left side of the housing 100, flowing from left to right with an initial low temperature. As the immersion liquid absorbs the heat from the battery 200, the temperature of the immersion liquid gradually increases along a left-to-right direction. The cooling liquid enters from the fourth end plate 321 on a right side of the liquid cooling plate 300, flowing from right to left with an initial low temperature. As the cooling liquid absorbs the heat from the battery 200, the temperature of the cooling liquid gradually increases along a right-to-left direction. During a simultaneous flow of both the immersion liquid and the cooling liquid, the immersion liquid exhibits a lower temperature in a region adjacent to a left side of the battery 200, and the immersion liquid exhibits a higher temperature in a region adjacent to a right side of the battery 200. Concurrently, the cooling liquid exhibits a higher temperature in the region adjacent to the left side of the battery 200, and the cooling liquid exhibits a lower temperature in the region adjacent to the right side of the battery 200. The immersion liquid and the cooling liquid can establish a dynamic balance for heat exchange on both sides of the battery 200. Although the higher temperature of the immersion liquid in the region adjacent to the right side of the battery 200 is unfavorable for the heat dissipation in the region adjacent to the right side of the battery 200, the lower temperature of the cooling liquid in the region adjacent to the right side of the battery 200 allows the lower-temperature cooling liquid to effectively assist in cooling the region adjacent to the right side of the battery 200. Similarly, although the higher temperature of the cooling liquid in the region adjacent to the left side of the battery 200 is unfavorable for the heat dissipation in the region adjacent to the left side of the battery 200, the lower temperature of the immersion liquid in the region adjacent to the left side of the battery 200 allows the lower-temperature immersion liquid to effectively assist in cooling the region adjacent to the left side of the battery 200. Thus, the reverse flow strategy achieves temperature complementarity between the immersion liquid and cooling liquid during the heat dissipation of the battery 200, optimizing an overall thermal management performance of the battery pack 10.

**It** should be noted that the flow direction of the cooling liquid within the liquid cooling plate 300 and the flow direction of the immersion liquid within the housing 100 in the embodiments refer to an overall flow trend or directionality, and impose no limitations on a specific flow path of the cooling liquid within the liquid cooling plate 300 or a specific flow path of the immersion liquid within the housing 100.

**In** some embodiments, the flow path of the immersion liquid within the housing 100 can be altered by adjusting the position of the first liquid inlet 130 on the first end plate 111 and the position of the first liquid outlet 140 on the second end plate 121, thereby optimizing the thermal management performance.

For example, the first liquid inlet 130 is located on a side of the first end plate 111 close to the liquid cooling plate 300, while the first liquid outlet 140 is located on a side of the second end plate 121 away from the liquid cooling plate 300. For instance, the liquid cooling plate 300 abuts on the bottom plate of the housing 100. By designing the first liquid outlet 140 and the first liquid inlet 130 with a height difference, the immersion liquid has more time and space to exchange heat with the surface of the battery 200 before flowing out of the housing 100. This ensures more sufficient contact between the immersion liquid and the surface of the battery 200, achieving a better heat dissipation effect and a more uniform heat dissipation.

**In** other examples, the liquid cooling plate 300 remains abutting on the bottom plate of the housing 100. The first liquid inlet 130 is located at the side of the first end plate 111 away from the liquid cooling plate 300, while the first liquid outlet 140 is located at the side of the second end plate 121 close to the liquid cooling plate 300. A height of the first liquid inlet 130 may be higher than a height of the first liquid outlet 140. As can be understood, the immersion liquid enters through the higher liquid inlet and flows downward naturally during the circulation. This increases a turbulence of the immersion liquid and also improves a contact area and heat exchange efficiency between the immersion liquid and the surface of the battery 200.

**In** other examples, along a width direction of the housing 100, the first liquid inlet 130 is located at a middle portion of the first end plate 111, and the first liquid outlet 140 is located at a middle portion of the second end plate 121; and/or along a width direction of the liquid cooling plate 300, the second liquid outlet 340 is located at a middle portion of the third end plate 311, and the second liquid inlet 330 is located at a middle portion of the fourth end plate 321. Here, along the width direction of the housing 100, the immersion liquid enters from the middle portion of the first end plate 111 and flows out from the middle portion of the second end plate 121. During this flow, the immersion liquid uniformly contacts different regions of the surface of the battery 200, achieving more uniform heat dissipation. Similarly, along the width direction of the liquid cooling plate 300, the cooling liquid enters from the middle portion of the fourth end plate 321 and flows out from the middle portion of the third end plate 311. During this flow, the cooling liquid also more uniformly contact different regions of the liquid cooling plate 300. This ensures that the heat transferred from the battery 200 to the liquid cooling plate 300 is dissipated uniformly and effectively, effectively preventing the formation of a localized hot spot on the surface of the battery 200 and improving the heat dissipation uniformity.

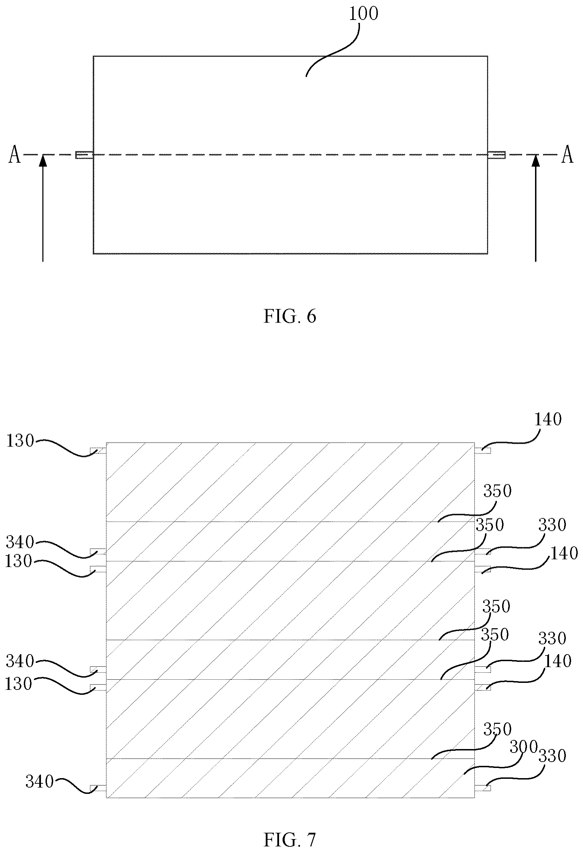

FIG. 5 is a schematic diagram of a third structure of the battery pack according to some embodiments of the present application. FIG. 6 is a schematic diagram of the structure of the battery pack shown in FIG. 5 when viewed from another angle. FIG. 7 is a cross-sectional view of the battery pack shown in FIG. 6 along line A-A. In some embodiments, the battery pack 10 includes a plurality of housings 100 and a plurality of liquid cooling plates 300. The housings 100 and the liquid cooling plates 300 are arranged alternately and distributed along a thickness direction of the liquid cooling plate 300. In the embodiments, the battery pack 10 consists of the housings 100 and the liquid cooling plates 300. Along the thickness direction of the liquid cooling plate 300 or a thickness direction of the housing 100, a liquid cooling plate 300 is arranged between each two adjacent ones of the housings 100, and a housing 100 is arranged between each two adjacent ones of the liquid cooling plates 300. For example, each of the liquid cooling plates 300 may be located at a bottom plate of a corresponding one of the housings 100. Since the housings 100 and the liquid cooling plates 300 are arranged alternately, except for a top plate of an uppermost one of the housings 100, which is not abutting on a liquid cooling plate 300, and with only its bottom plate abutting on a liquid cooling plate 300, each of other ones of the housings 100 has a liquid cooling plate 300 on an upper side and a liquid cooling plate 300 on a lower side. In other examples, another liquid cooling plate 300 may also be provided on the top plate of the uppermost one of the housings 100, ensuring that each of the housings 100 has a liquid cooling plate 300 on the upper side and a liquid cooling plate 300 on the lower side. Consequently, the heat generated by the batteries 200 can be absorbed and dissipated from different directions by the cooling liquid within liquid cooling plates 300 on both the upper side and the lower side of the housing 100 and the immersion liquid within the housing 100, effectively improving the heat dissipation efficiency. Moreover, since the fourth end portion 320 of each liquid cooling plate 300 on the upper and lower sides of each housing 100, where the second liquid inlet 330 for the cooling liquid is located, abuts on the second end portion 120, where the first liquid outlet 140 for the immersion liquid is located, and the third end portion 310, where the second liquid outlet 340 for the cooling liquid is located, abuts on the first end portion 110, where the first liquid inlet 130 for the immersion liquid is located, the cooling liquid within each liquid cooling plate 300 on both the upper and lower sides of each housing 100 can flow in a direction opposite relative to the immersion liquid. In this way, the cooling liquid within the liquid cooling plates 300 on both the upper and lower sides of each housing 100 and the immersion liquid within the housing 100 both form distinct temperature gradients relative to the battery 200. This ensures that there is always lower-temperature cooling medium absorbing the heat in different regions of the battery 200, reducing temperature variations across the surface of the battery 200 and improving overall heat dissipation performance of the battery pack 10. Furthermore, the alternating arrangement of the housings 100 and the liquid cooling plates 300 facilitates a scalability and modular design for the battery pack 10, enabling adaptation to battery packs 10 of different scales and requirements.

**It** should be noted that in some embodiments, the liquid cooling plate 300 may be located on the top plate of a corresponding housing 100, which imposes no limitations to the embodiments.

**In** some embodiments, each liquid cooling plate 300 includes a cover plate 350 abutting on a corresponding housing 100, and the cover plate 350 further covers and seals a corresponding accommodation space. In the embodiments, the cover plate 350 serve both as part of the liquid cooling plate 300 and as a sealing member for the housing 100. Consequently, the housing 100 does not require an additional sealing member, and the liquid cooling plate 300 and housing 100 can share the cover plate 350. This integrated design reduces material usage for the housing 100. For example, the cover plate 350 may also be provided with small holes, allowing the immersion liquid and the cooling liquid at different temperatures to mix to a certain extent, thereby enabling more uniform heat dissipation.

**It** can be understood that when the battery pack 10 includes only one housing 100 and one liquid cooling plate 300, one sealing member for the housing 100 can be saved. When the battery pack 10 includes a plurality of housings 100 and a plurality of liquid cooling plates 300, since the plurality of housings 100 and the plurality of liquid cooling plates 300 are alternately arranged, the cover plate 350 of the liquid cooling plate 300 on the upper side of each housing 100 can be configured to seal the upper side of the housing 100, and the cover plate 350 of the liquid cooling plate 300 on the lower side of each housing 100 can be configured to seal the lower side of the housing 100, thereby saving even more sealing members. For example, when the battery pack 10 includes four housings 100 and four liquid cooling plates 300, seven sealing members can be saved.

Therefore, the design in the embodiments integrating the sealing functions of the liquid cooling plate 300 and the housing 100 reduces material usage, simplifies an overall structure of the battery pack 10, lowers an total weight of the battery pack 10, improves a volumetric energy density of the battery pack 10 while also simplifies manufacturing and assembly process, thereby reducing an overall cost.

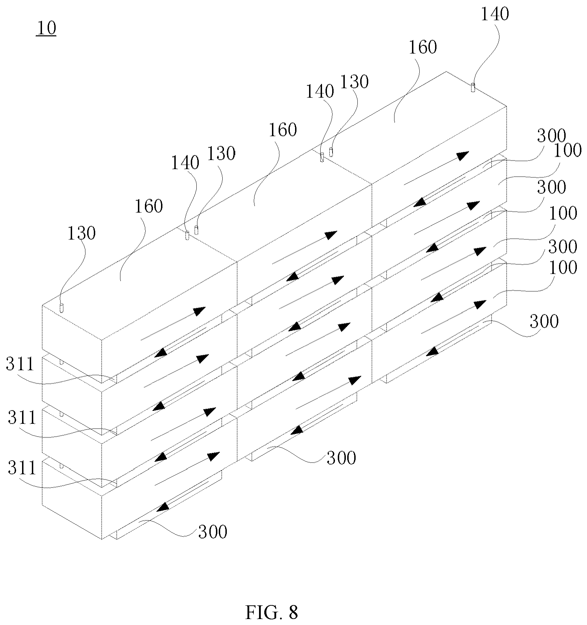

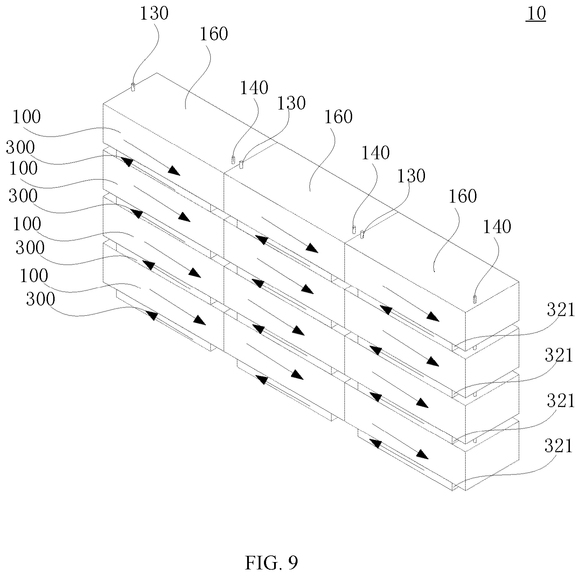

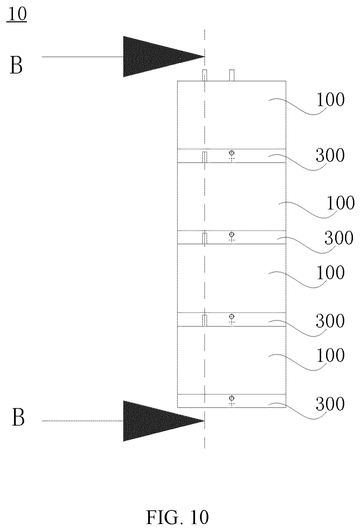

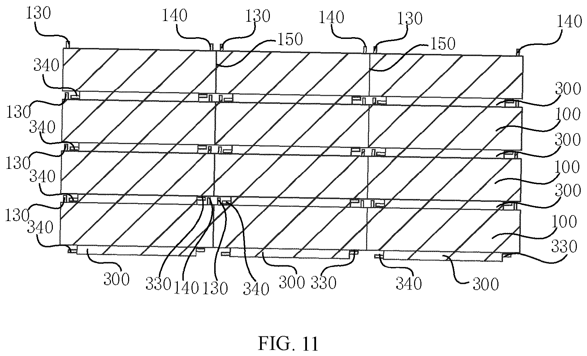

FIG. 8 is a schematic diagram of a fourth structure of the battery pack according to some embodiments of the present application. FIG. 9 is a schematic diagram of the structure of the battery pack shown in FIG. 8 when viewed from another angle. FIG. 10 is a schematic diagram of the structure of the battery pack shown in FIG. 8 when viewed from still another angle. FIG. 11 is a cross-sectional view of the battery pack shown in FIG. 10 along line B-B. In some embodiments, the battery pack 10 includes a plurality of housings 100 and a plurality of liquid cooling plates 300. Along a length direction of the housing 100, the housings 100 are abutting on each other, and along a height direction of the housing 100, the housings 100 and the liquid cooling plates 300 are alternately arranged.

**It** can be understood that the battery pack 10 includes a plurality of battery units each may include one housing 100 and one liquid cooling plate 300 stacked in a same manner. In the battery pack 10, not only a plurality of battery units are arranged vertically, but also a plurality of battery units are arranged abutting on each other horizontally, thereby increasing a scale of the battery pack 10. Consequently, the battery pack 10 in the embodiments exhibits a high modularity and scalability, enabling adaptation to various application scenarios. Whether for electric vehicles, energy storage systems, or other equipment requiring high energy density and efficient heat dissipation, the scale of the battery pack 10 can be adjusted to meet specific demands.

**In** some embodiments, each housing 100 has one chamber. Along the length direction of the housings 100, two adjacent housings 100 share a single isolation plate 150 to separate the chambers of the two adjacent housings 100.

**In** the embodiments, two adjacent housings 100 share a single isolation plate 150 to further reduce structural materials required for the battery pack 10. For example, each row of the battery packs 10 includes three housings 100, the housing 100 which is arranged in the middle shares one isolation plate 150 with the housing 100 on the left and shares one isolation plate 150 with the housing 100 on the right. This arrangement saves the production of two isolation plates 150, thereby further reducing a weight of the battery pack 10 while enabling a more compact overall array of the battery pack 10.

**In** some embodiments, along a length direction of the liquid cooling plate 300, the cooling liquid within two adjacent liquid cooling plates 300 has a same flow direction, and the immersion liquid in two adjacent housings 100 has a same flow direction.

**It** can be understood that along the length direction of the housings 100, after the immersion liquid absorbing the heat from the battery 200, the temperature of the immersion liquid gradually increases along the direction of the liquid flow. As it approaches an adjacent housing 100, the immersion liquid reaches a higher temperature, which is detrimental to the heat dissipation for the battery 200 in a region adjacent to the adjacent housing 100. However, since the immersion liquid within the adjacent housing 100 adjacent to the region is in an initial state of flow and has not passed through heat sources or has passed through fewer heat sources, the temperature of the immersion liquid within the adjacent housing 100 adjacent to the region is relatively low. This lower-temperature immersion liquid can effectively assist in dissipating heat from this region. Therefore, along the length direction of the housing 100, the immersion liquid in two adjacent housings 100 forms a temperature difference adjacent to a connection region between the two adjacent housings 100, complementing each other to cool the battery 200, and enabling the entire battery pack 10 to dissipate heat more uniformly.

For example, each liquid cooling plate 300 is adjacent and connected to the bottom plate of a corresponding housing 100. In the embodiments, except for a first row of housings 100, each of which only has a liquid cooling plate 300 on the bottom plate, each of other housings 100 has a liquid cooling plates 300 on the upper side and a liquid cooling plates 300 on the lower side. Additionally, except for a first column of housings 100, each of other housings 100 has a housing 100 on a left side and a housing 100 on a right side. Here, the flow direction of the cooling liquid within the liquid cooling plates 300 on both the upper and lower sides of the housing 100 is opposite to the flow direction of the immersion liquid within the housing 100. The flow direction of the immersion liquid within the housings 100 on both the left and right sides of the housing 100 is the same as the flow direction of the immersion liquid within the housing 100. This arrangement ensure that, relative to different regions above, below, left, and right of the battery 200 within the enclosure 100, there is always a lower-temperature cooling medium absorbing the heat, reducing temperature variations on the surface of the battery 200 and improving the overall heat dissipation performance of the battery pack 10.

**In** some embodiments, along a thickness direction of the housings 100, each housing 100 includes a first side plate 160 arranged close to or away from a corresponding liquid cooling plate 300. A portion of the first side plate 160 located at the first end portion 110 is provided with the first liquid inlet 130, and a portion of the first side plate 160 located at the second end portion 120 is provided with the second liquid inlet 330. Along the length direction of the liquid cooling plates 300, the third end portion 310 includes a third end plate 311, and the fourth end portion 320 includes a fourth end plate 321. The third end plate 311 and fourth end plate 321 are arranged opposite to each other. The second liquid outlet 340 is disposed on the third end plate 311, and the second liquid inlet 330 is disposed on the fourth end plate 321.

Here, the first side plate 160 may be the top plate or the bottom plate of the housing 100. For example, if the first side plate 160 serves at the top plate of the housing 100, the first liquid inlet 130 may be disposed on a portion of the first side plate 160 at the first end portion 110, and the first liquid outlet 140 may be disposed on a portion of the first side plate 160 at the second end portion 120. Thus, the first liquid inlet 130 and first liquid outlet 140 are spaced apart from each other and disposed on two ends of the first side plate 160 respectively. It can be understood that in the embodiments, the battery pack 10 includes a plurality of housings 100 arranged abutting on each other in the horizontal direction and alternately arranged with a plurality of liquid cooling plates 300 in the vertical direction. Therefore, by arranging the first liquid inlet 130 and second liquid inlet 330 spaced apart from each other at the top plate of the housing 100, each row of housings 100 can be closely arranged in the horizontal direction, reducing space waste caused by improper positioning of the first liquid inlet 130 and first liquid outlet 140.

**It** should be noted that the first side plate 160 may also be a bottom plate of the housing 100, which is not limited in the embodiments.

**In** some embodiments, along the length direction of the liquid cooling plates 300, each adjacent two liquid cooling plates 300 are spaced apart from each other with a gap, and at least part of the first liquid inlets 130, first liquid outlets 140, second liquid inlets 330, and second liquid outlets 340 of the adjacent two liquid cooling plates 300 are exposed in the gaps.

The liquid cooling plates 300 and housings 100 are alternately arranged in the vertical direction, while the liquid cooling plates 300 are spaced apart from each other in the horizontal direction, providing sufficient space for arrangement of the first liquid inlets 130, the first liquid outlets 140, the second liquid inlets 330, and the second liquid outlets 340, ensuring unobstructed flow of the immersion liquid and the cooling liquid within the battery pack 10. The first liquid inlets 130, the first liquid outlets 140, the second liquid inlets 330, and the second liquid outlets 340 are positioned in the gaps, also facilitating inspection and maintenance of these interfaces.

**In** some embodiments, the first liquid inlets 130 of the housings 100 are communicated with each other; and/or the second liquid inlets 330 of the liquid cooling plates 300 are communicated with each other.

For example, by branching from a main pipe to each first liquid inlet 130 and/or by branching from a main pipe to each second liquid inlet 330, it is possible to ensure uniform immersion fluid supply to all housings 100 or uniform coolant supply to all liquid cooling plates 300. The design of intercommunicated first liquid inlets 130 or intercommunicated second liquid inlets 330 can significantly simplify pipe layout, reducing complexity and overall length of the pipe. In this way, not only manufacturing costs and maintenance difficulty can be lowered, but also overall aesthetic and space utilization of the battery pack 10 can be improved.

The embodiments of the present application further provide a battery system including a control component and the battery pack 10 according to any of the aforementioned embodiments. The control component includes a battery management system (BMS) and a battery disconnect unit (BDU), among other components. The BMS is primarily designed for intelligent management and maintenance of each battery unit 300, monitoring battery status to prevent overcharging and overdischarging, thereby extending the lifespan of the battery. The BMS further controls the flow of the immersion liquid and the cooling liquid. Specifically, the BMS can regulate a flow rate of the immersion liquid based on the temperature of the immersion liquid and regulate a flow rate of the cooling liquid according to the temperature of the cooling liquid as well. A main function of the BDU is to receive electrical energy from a charging system and then control a speed and torque of a motor through a controller to drive a vehicle. Simultaneously, the BDU needs to monitor the battery's status in real time to ensure safe operation of the battery. The battery pack 10 adopts a combination of both indirect liquid cooling manner and immersion cooling manner, not only leveraging the advantages of both cooling technologies but also ensuring that the lower-temperature cooling medium is constantly absorbing the heat in different regions of the battery 200 by arranging the second end portion 120, where the first liquid outlet 140 is located, abutting on the fourth end portion 320, where the second liquid inlet 330 is located, reducing temperature variations on the surface of the battery 200 and enhancing the overall heat dissipation performance of the battery pack 10, This better meets the thermal dissipation demands of the battery system during high-power, high-density operation. Moreover, the battery pack 10 can be scaled as needed by alternately stacking the plurality of housings 100 and the plurality of liquid cooling plates 300 in the height direction and further expanding horizontally by adding more combinations of housings 100 and liquid cooling plates 300. Whether for the electric vehicle, the energy storage system, or other equipment requiring high energy density and efficient heat dissipation, the scale of the battery pack 10 can be adjusted to meet specific demands.

## Claims

1. A battery pack (10), comprising:
at least one housing (100) having an accommodation space for accommodating an immersion liquid, the housing (100) comprising a first end portion (110) and a second end portion (120) disposed opposite to each other, wherein the first end portion (110) is provided with a first liquid inlet (130), and the second end portion (120) is provided with a first liquid outlet (140);
at least one battery (200) disposed within the accommodation space; and
at least one liquid cooling plate (300) abutting on the housing (100) and configured to accommodate a cooling liquid, the liquid cooling plate (300) comprising a third end portion (310) and a fourth end portion (320) disposed opposite to each other, wherein the third end portion (310) is provided with a second liquid outlet (340), and the fourth end portion (320) is provided with a second liquid inlet (330),
wherein the first end portion (110) abuts on the third end portion (310), and the second end portion (120) abuts on the fourth end portion (320).

2. The battery pack (10) according to claim 1, wherein 1 cm ≤ L1 ≤ 10 cm, where L1 represents a distance between the first liquid inlet (130) and the second liquid outlet (340); and/or
15 cm ≤ L2 ≤ 22 cm, where L2 represents a distance between the first liquid outlet (140) and a side of the housing (100) away from the liquid cooling plate (300); and/or
L4 ≤ L3, and 2 cm ≤ L4 ≤ 6 cm, where L3 represents a distance between the second liquid inlet (330) and a side of the liquid cooling plate (300) close to the housing (100), and L4 represents a distance between the second liquid outlet (340) and the side of the liquid cooling plate (300) close to the housing (100).

3. The battery pack (10) according to claim 1 or 2, wherein 2 ≤ H1/H2 ≤ 5, where H1 represents a height of the housing (100), and H2 represents a height of the liquid cooling plate (300).

4. The battery pack (10) according to any one of claims 1-3, wherein 15 cm ≤ D1 D2 ≤ 22 cm, where D1 represents a length of the housing (100), and D2 represents a length of the liquid cooling plate (300).

5. The battery pack (10) according to any one of claims 1-4, wherein in a length direction of the housing (100), the first end portion (110) comprises a first end plate (111), the second end portion (120) comprises a second end plate (121) opposite to the first end plate (111), the first liquid inlet (130) is disposed on the first end plate (111), and the first liquid outlet (140) is disposed on the second end plate (121); and
in a length direction of the liquid cooling plate (300), the third end portion (310) comprises a third end plate (311), the fourth end portion (320) comprises a fourth end plate (321) opposite to the third end plate (311), the second liquid outlet (340) is disposed on the third end plate (311), the second liquid inlet (330) is disposed on the fourth end plate (321),the third end plate (311) is located at a same side of the liquid cooling plate (300) as the first end plate (111), and the fourth end plate (321) is located at a same side of the liquid cooling plate (300) as the second end plate (121).

6. The battery pack (10) according to any one of claims 1-5, wherein a flow direction of the cooling liquid within the liquid cooling plate (300) is opposite to a flow direction of the immersion liquid within the housing (100).

7. The battery pack (10) according to any one of claims 1-6, wherein the liquid cooling plate (300) further comprises a cover plate (350) abutting on the housing (100) and configured to cover and seal the accommodation space.

8. The battery pack (10) according to claim 1, wherein the battery pack comprises a plurality of housings (100), and a plurality of liquid cooling plates (300); and
the plurality of housings (100) and the plurality of liquid cooling plates (300) are arranged in at least one column, and ones of the housings (100) and ones of the liquid cooling plates (300) in each of the at least one column are alternately arranged along a thickness direction of each of the liquid cooling plates (300).

9. The battery pack (10) according to claim 8, wherein the at least one column comprises a plurality of columns, the plurality of housings (100) are arranged in a plurality of first rows, and the plurality of liquid cooling plates (300) are arranged in a plurality of second rows; and
each of the first rows comprises ones of the housings (100) sequentially arranged along a length direction of each of the housings (100), and every two adjacent ones of the housings (100) in the each of the first rows abut on each other.

10. The battery pack (10) according to claim 9, wherein the immersion liquid within one of the every two adjacent ones of the housings (100) has a same flow direction as the immersion liquid within another one of the every two adjacent ones of the housings (100) ; and
each of the second rows comprises ones of the liquid cooling plates (300) sequentially arranged along a length direction of each of the liquid cooling plates (300) and, for every two adjacent ones of the liquid cooling plates (300) in the each of the second rows, the cooling liquid within one of the every two adjacent ones of the liquid cooling plates (300) has a same flow direction as the cooling liquid within another one of the every two adjacent ones of the liquid cooling plates (300).

11. The battery pack (10) according to claim 9 or 10, wherein each of the housings (100) is provided with a chamber, and the every two adjacent ones of the housings (100) share an isolation plate (150) for isolating the chamber of one of the every two adjacent ones of the housings (100) from the chamber of another one of the every two adjacent ones of the housings (100).

12. The battery pack (10) according to any one of claims 9-11, wherein each housing (100) of the housings (100) further comprises a first side plate (160) close to or away from one of the liquid cooling plates (300) adjacent to the each housing (100) in a thickness direction of the each housing (100), the first liquid inlet (130) is disposed on a portion of the first side plate (160) located at the first end portion (110), and the first liquid outlet (140) is disposed on a portion of the first side plate (160) located at the second end portion (120); and
in a length direction of each of the liquid cooling plates (300), the third end portion (310) comprises a third end plate (311), the fourth end portion (320) comprises a fourth end plate (321) opposite to the third end plate (311), the second liquid outlet (340) is disposed on the third end plate (311), and the second liquid inlet (330) is disposed on the fourth end plate (321).

13. The battery pack (10) according to claim 12, wherein each of the second rows comprises ones of the liquid cooling plates (300) sequentially arranged at intervals along the length direction of each of the liquid cooling plates (300), to form at least one gap surrounded by two adjacent ones of the liquid cooling plates (300) and four of the housings (100); and
the first liquid inlet (130) of one of the four of the housings (100), the first liquid outlet (140) of another one of the four of the housings (100), the second liquid inlet (330) of one of the two adjacent ones of the liquid cooling plates (300), and the second liquid outlet (340) of another one of the two adjacent ones of the liquid cooling plates (300) are exposed to the gap.

14. The battery pack (10) according to claim 12 or 13, wherein the plurality of housings (100) are respectively provided with a plurality of first liquid inlets (130) communicating with each other; and/or
the plurality of liquid cooling plates (300) are respectively provided with a plurality of second liquid inlets (330) communicating with each other.

15. A battery system, comprising the battery pack (10) according to any one of claims 1-14 and a control component for controlling the battery pack (10).
